Europäisches Patentamt

European Patent Office

Office européen des brevets

(19)

(11) Veröffentlichungsnummer: **0 017 104**
**B1**

(12) **EUROPÄISCHE PATENTSCHRIFT**

(45) Veröffentlichungstag der Patentschrift: **04.07.84**

(21) Anmeldenummer: **80101503.3**

(22) Anmeldetag: **21.03.80**

(51) Int. Cl.³: **A 23 G 1/20, A 23 G 1/22**

(54) **Vorrichtung zum Herstellen von Schokoladeformteilen.**

(30) Priorität: **09.04.79 DE 2914281**

(43) Veröffentlichungstag der Anmeldung:
**15.10.80 Patentblatt 80/21**

(45) Bekanntmachung des Hinweises auf die Patenterteilung:
**04.07.84 Patentblatt 84/27**

(84) Benannte Vertragsstaaten:
**AT BE CH DE FR GB IT NL**

(56) Entgegenhaltungen:
**BE - A - 489 763**
**DE - B - 1 081 743**
**DE - B - 1 180 613**
**DE - C - 462 968**
**DE - C - 921 551**

Die Akte enthält technische Angaben, die nach
dem Eingang der Anmeldung eingereicht wurden
und die nicht in dieser Patentschrift enthalten
sind.

(73) Patentinhaber: **Kaupert, Günther, Dr.-Ing.**
**Thüringer Strasse 1**
**D-5927 Erndtebrück (DE)**

(72) Erfinder: **Kaupert, Günther, Dr.-Ing.**
**Thüringer Strasse 1**
**D-5927 Erndtebrück (DE)**

Courier Press, Leamington Spa, England.

**Beschreibung**

Die Erfindung betrifft eine Vorrichtung zum Herstellen von Schokoladeformteilen bestehend aus einer mehrteiligen Form, die bis auf die Mündung einer Einspritzbohrung allseitig zur Bildung eines dem Schokoladeformteil entsprechenden Hohlraums verschließbar ist, sowie einem Spritzwerkzeug, mit dem schmelzflüssige Schokoladenmasse unter Druck durch die Einspritzbohrung in den Hohlraum eingespritzt wird, wobei zwischen zwei massiven, von Kühlkanälen und Einspritzbohrungen durchdrungenen Formteilen ein an das herzustellende Schokoladenformteil angepaßtes Halte- und Transportelement einspannbar ist.

Eine Vorrichtung dieser Bauart ist aus der DE—AS—1 180 613 bekannt. In dieser Druckschrift werden eine Versuchseinrichtung und damit durchgeführte Versuche beschrieben, deren Ergebnisse zeigen, daß durch Spritzgießen Körper aus Schokoladenmasse so herstellbar sind, daß man gut aussehende und bei der Formöffnung genügend harte Formlinge erhält. Dabei wird unter Druck stehende, schmelzflüssige Schokoladenmasse in geschlossene, auf eine Temperatur von −5 bis −15°C gekühlte Hohlformen eingespritzt.

Für die serienmäßige Anwendung dieses Verfahrens wird in derselben Druckschrift vorgeschlagen, zwei parallel aufeinanderlaufende, dünne, thermoplastische Folien mit eingeformten Schalen in die Spritzvorrichtung nach vorhergehender Lochung zum Einspritzen einzuführen. Diese Methode hat jedoch keinen Eingang in die Praxis gefunden. Zum einen verzögern die thermoplastischen Folien die Wärmeabfuhr aus der Schokoladenmasse und damit das spontane Erstarren der Formlinge, wie dies sowohl zum Erzielen der geforderten Qualität als auch einer hohen Taktzahl erforderlich ist; zum anderen verfestigt sich die Schokoladenmasse im Einspritzkanal nach jedem Einspritzvorgang zu einem starren Pfropfen, der den Spritzvorgang beeinträchtigt.

Der Erfindung liegt daher die Aufgabe zugrunde, eine Vorrichtung dieser Bauart zum Spritzgießen von Schokoladeformteilen so zu verbessern, daß damit eine hohe Taktzahl erzielbar ist unter voller Berücksichtigung der erforderlichen Qualität der herzustellenden Schokoladeformteile sowie einer einwandfreien und einfachen Entnahme derselben aus der Spritzvorrichtung.

Zur Lösung dieser Aufgabe werden die im Kennzeichen der Patentansprüche enthaltenen, konstruktiven Maßnahmen vorgeschlagen. Damit wird neben einer spontanen Unterkühlung der Schokoladenmasse und einer hohen Wärmeabfuhr erreicht, daß die Schokoladeformteile unmittelbar nach dem Öffnen der Form mit Hilfe des Halte- und Transportelements aus der Form entnommen werden können, da das Halte- und Transportelement die in diesem Stadium noch nicht ausreichende Gesamtfestigkeit der Schokoladeformteile kompensiert.

Die Erfindung wird im folgenden anhand von Zeichnungen näher erläutert:

Die Figur 1 zeigt im Schnitt ein zweiteiliges, geschlossenes Formwerkzeug mit eingelegter Halte- und Transportplatte zur Herstellung von napf- oder trogartigen Schokoladehohlkörpern,

die Figur 2 zeigt einen Schnitt durch ein Formwerkzeug mit einer gitterförmigen Halte- und Transportplatte zur Herstellung von massiven Schokoladeformteilen,

die Figur 3 zeigt im Schnitt die Einspritzdüse am Ende des Einspritzkanals.

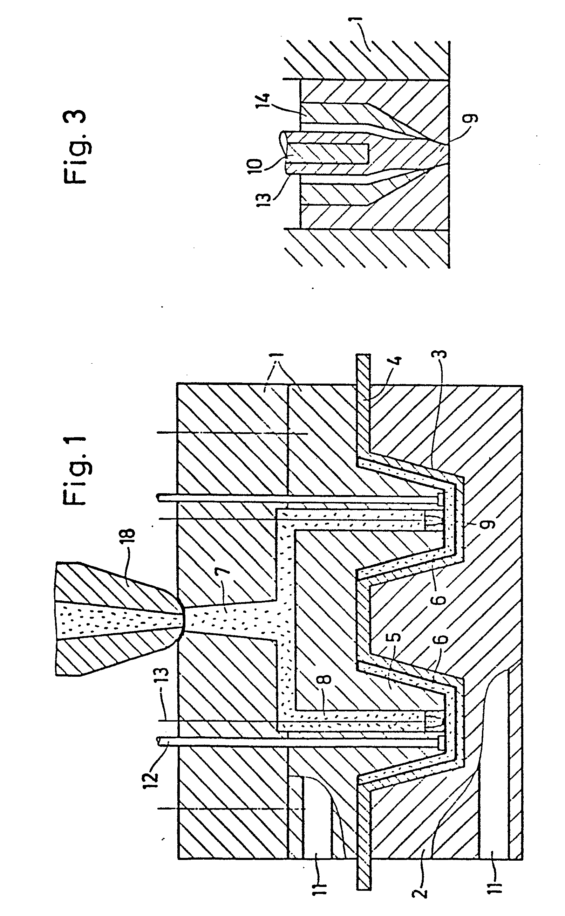

Das Formwerkzeug gemäß Figur 1 besteht im wesentlichen aus einem Oberteil 1 und einem Unterteil 2. Das Unterteil 2 weist napf- oder trogartige Vertiefungen 3 auf und ist formschlüssig mit einer Halte- und Transportplatte 4 ausgekleidet. Das Oberteil 1 hat Vorsprünge 5, die so in die Vertiefungen 3 hineinragen, daß bei geschlossenem Werkzeug mit zwischen den Werkzeugteilen 1, 2 eingespannter Halte- und Transportplatte 4 napf- oder trogförmige Hohlräume 6 entstehen, in die die schmelzflüssige Schokolademasse eingespritzt wird. Hierfür sind in das Oberteil 1 Spritzkanäle 7, 8 eingelassen, die an dem unteren, an die Hohlräume 6 angrenzenden Ende der Vorsprünge 5 in feine, verschließbare Düsen 9 ausmünden. Die Düsen 9 sind mit einer Heizpatrone 10 (Fig. 3) ausgestattet, die in einer Verschlußnadel 13 sitzt. Düsen 9 und Kanäle 8 sind außerdem mit einer Isolierschicht 14 ausgekleidet.

Ober- und Unterteil 1, 2 weisen Kanäle 11 auf, durch die ein flüssiges Kühlmittel, z.B. Ammoniak, geleitet werden kann. Außerdem ist das Oberteil 1 mit stabförmigen Auswerfern 12 ausgestattet, die axial beweglich sind und mit ihren unteren Enden an den Hohlraum 6 angrenzen. Alle an den Hohlraum 6 angrenzenden Flächen sind mit einem Trennmittel, z.B. Tetrafluorpolyethylen, beschichtet.

Nach dem Einlegen der Halte- und Transportplatte 4 und Schließen des Formwerkzeugs 1, 2 wird mit einem Spritzwerkzeug (angedeutet durch Spritzkopf 18) schmelzflüssige Schokolademasse unter hohem Druck (bis zu 30 bar) in den Spritzkanal 7 eingespritzt, von wo aus sich die Masse auf die Kanäle 8 verteilt. Durch die geöffneten Düsen 9 gelangt die Masse in die Hohlräume 6, um diese vollständig auszufüllen. Die dabei verdrängte Luft kann aufgrund von Oberflächenrauigkeiten zwischen den Trennflächen entweichen. Während und nach diesem Vorgang wird das Formwerkzeug mit einer durch die Kanäle 11 geleiteten Flüssigkeit gekühlt, wobei das Unterteil 2 auf ca. 20°C und das Oberteil 1 auf ca. −5°C gehalten wird Nach dem Erstarren der an das Oberteil 1 angrenzenden Schokoladeformteiloberfläche wird das Formwerkzeug 1, 2 geöffnet, wobei die Auswerfer 12 zunächst am erstarrten Schokoladeformteil verbleiben. Nach dem Zurückziehen der Auswerfer 12 kann die Platte 4 zusammen mit den darin ruhenden Schokoladeformteilen entnommen und zur Endkühlung weitertransportiert werden. Vor dem nächsten Spritzvorgang werden die Düsen 9 und gegebenfalls alle Spritzkanäle 7, 8 beheizt, um die darin enthaltene, erstarrte Masse wieder zu verflüssigen. Die Platte 4 kann aus einer formbeständig geprägten Metallfolie oder aus Kunststoff bestehen und gleichzeitig als Verpackung an den Schokoladeformteilen verbleiben.

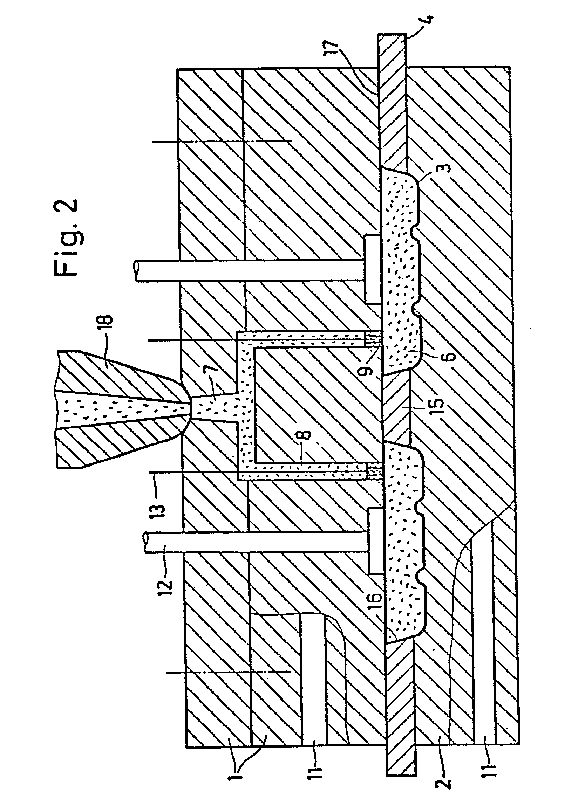

Die Figur 2 zeigt eine ähnliche Vorrichtung wie Figur 1, jedoch zur Herstellung von massiven Schokoladeformteilen. Elemente mit denselben Funktionen wie in Figur 1 sind daher mit den gleichen Ziffern bezeichnet.

In diesem Ausführungsbeispiel hat die Halte- und Transportplatte 4 die Form einer Loch- oder Gitterplatte, deren Stege 15 zwischen den Teilen 1 und 2 eingespannt sind. Die die Löcher umgrenzenden Stirnkanten 16 der Gitterstege 15 schließen bündig an die Vertiefungen 3 an und vervollständigen diese. Dabei sind die Stirnkanten 16 gegen die Trennebene 17 der Teile 1 und 2 konisch geneigt, so daß die in den Hohlräumen 6 entstandenen Schokoladeformteile beim Herausnehmen aus der Form 1, 2 und beim Weitertransport nicht aus der Halte- und Transportplatte 4 herausfallen können.

## Patentansprüche

1. Vorrichtung zum Herstellen von Schokoladeformteilen, bestehend aus einer mehrteiligen Form, die bis auf die Mündung einer Einspritzbohrung allseitig zur Bildung eines dem Schokoladeformteil entsprechenden Hohlraums verschließbar ist, sowie einem Spritzwerkzeug, mit dem schmelzflüssige Schokoladenmasse unter Druck durch die Einspritzbohrung in den Hohlraum eingespritzt wird, wobei zwischen zwei massiven, von Kühlkanälen und Einspritzbohrungen durchdrungenen Formteilen ein an das herzustellende Schokoladenformteil angepaßtes Halte- und Transportelement einspannbar ist, dadurch gekennzeichnet, daß

a) das Halte- und Transportelement (4) den Unterteil des Formwerkzeuges (Formteil 2) formschlüssig auskleidet bzw. bündig vervollständigt, während der Oberteil des Hohlraums (Formteil 1) freibleibt, und daß

b) die Einspritzbohrung (7, 8) an ihrer an den Hohlraum (6) angrenzenden Mündung als verschließbare Düse (9) ausgebildet ist, wobei

c) die Einspritzbohrungen (8) mit einer Isolierschicht (14) ausgekleidet sind.

2. Vorrichtung nach Anspruch 1, dadurch gekennzeichnet, daß das Formteil (2) Vertiefungen (3) aufweist, die mit dem Halte- und Transportelement (4) formschlüssig ausgekleidet sind, und daß das andere Formteil (Oberteil 1) Vorsprünge (5) hat, die bei geschlossener Form unter Bildung napf- oder trogartiger Hohlräume (6) in die Vertiefungen (3) hineinragen.

3. Vorrichtung nach Anspruch 1, dadurch gekennzeichnet, daß das Halte- und Transportelement (4) als zwischen den Formteilen (1, 2) eingespannte Lochplatte oder Gitter (15) ausgebildet ist, wobei die das Loch bzw. die Gitterdurchbrüche begrenzenden Randflächen (16) gegen die Trennebene (17) der Formteile (1, 2) geneigt sind.

4. Vorrichtung nach Anspruch 1, dadurch gekennzeichnet, daß die Düsenverschlußnadel (13) heizbar ist.

5. Vorrichtung nach Anspruch 1, dadurch gekennzeichnet, daß die mit der Schokoladenmasse in Berührung kommenden Formteile (1, 2) mit einem Trennmittel versehen sind.

## Revendications

1. Dispositif pour fabriquer des pièces moulées en chocolat, comprenant un moule en plusieurs parties qui est susceptible d'être fermé de tous les côtés à l'exception d'une ouverture formant un orifice d'injection, pour former une cavité creuse correspondant à la pièce de chocolat à mouler, ainsi qu'un outil d'injection à l'aide duquel la masse de chocolat fondue à l'état fluide est injectée sous pression dans la cavité à travers l'orifice d'injection, un élément de fixation et de transfert étant adapté à la pièce moulée en chocolat, à fabriquer, pour être fixé entre deux parties de moule, massives, traversées par des canaux de refroidissement et par des orifices d'injection, caractérisé en ce que:

a) l'élement de fixation et de transfert (4) revêt la partie inférieure du moule (partie de moule 2) par une liaison par la forme ou à fleur, complètement alors que la partie supérieure de la cavité (partie de moule 1) reste libre, et en ce que:

b) l'orifice d'injection (7, 8) est réalisé sous la forme d'une buse (9) susceptible d'être fermée, pour son orifice au niveau de la cavité (6), et

c) les perçages d'injection (8) sont revêtus d'une couche isolante (14).

2. Dispositif selon la revendication 1, caractérisé en ce que la partie de moule (2) comporte des cavités (3) qui sont revêtues par la forme avec l'élément de fixation de transfert (4) et en ce que l'autre partie de moule (partie supérieure 1) comporte des saillies (5) qui pénètrent dans les cavités (3) en formant des cavités (6) en godets ou en cuvettes lorsque le moule est fermé.

3. Dispositif selon la revendication 1, caractérisé en ce que l'élément de fixation et de transfert (4) est une plaque trouée ou une grille (15) fixée entre les parties de moule (1, 2) et les surfaces de bord (16) qui délimitent le trou ou les ouvertures de la grille sont inclinées par rapport au plan de séparation (17) des parties de moule (1, 2).

4. Dispositif selon la revendication 1, caractérisé en ce que l'aiguille de fermeture de buse (13) est susceptible d'être chauffée.

5. Dispositif selon la revendication 1, caractérisé en ce que les parties de moule (1, 2) qui viennent en contact avec la masse de chocolat sont munies d'un agent de séparation.

**Claims**

1. Apparatus for making molded articles of chocolate, comprising a multisectional mold which may be fully closed except for an injection opening so as to define a cavity corresponding to said article of chocolate, and an injection tool for injecting under pressure flowable molten chocolate material through said injection opening into said cavity wherein two solid mold sections, which have cooling channels and injection bores formed therein, are adapted to tightly receive therebetween a retaining and handling element which matches in shape the article of chocolate to be made, characterized in that

a) said retaining and handling element (4) is fitted into the lower section of the mold (mold section 2) where it fully defines the mold cavity whose upper part is defined solely by the upper mold section (mold section 1) and that

b) the injection bore includes at its openings (7, 8) adjacent the cavity (6) a sealable nozzle 9, and

c) the injection bore (8) is lined with an insulating layer (14).

2. Apparatus according to claim 1, characterized in that the mold section (2) has depressions (3) with surfaces closely lined by the retaining and handling element (4) and that the other mold section (upper section 1) has projections (5) which when the mold is closed, extend into the depressions (3) so as to form cup or trough-like cavities (6).

3. Apparatus according to claim 1, characterized in that the retaining and handling element (4) is a plate provided with holes or a grid (15) engaged between the mold sections (1, 2) wherein the walls (16) circumferentially limiting the plate holes or the grid openings are inclined with respect to the separation plane (17) of the mold sections (1, 2).

4. Apparatus according to claim 1, characterized in that the nozzle seal needle (13) is heatable.

5. Apparatus according to claim 1, characterized in that the surfaces of the mold sections adapted to be contacted by said chocolate material are provided with a parting compound.

Fig. 3

Fig. 1

Fig. 2